(19) Europäisches Patentamt

European Patent Office

Office européen des brevets

(11) EP 0 896 420 A2

(12) **EUROPÄISCHE PATENTANMELDUNG**

(43) Veröffentlichungstag:
10.02.1999 Patentblatt 1999/06

(51) Int. Cl.⁶: H02M 7/48

(21) Anmeldenummer: 98114017.1

(22) Anmeldetag: 27.07.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 07.08.1997 DE 19734272

(71) Anmelder:
SIEMENS AKTIENGESELLSCHAFT
80333 München (DE)

(72) Erfinder: Weiss, Helmut Dr.
8700 Leoben (AT)

(54) **Verfahren und Vorrichtung zur Ausregelung von Verzerrungen im Magnetisierungsstrom eines Transformators, der mit einem selbstgeführten Stromrichter mit abschaltbaren Leistungshalbleiterschaltern verknüpft ist**

(57)     Die Erfindung bezieht sich auf ein Verfahren zur Ausregelung von Verzerrungen im Magnetisierungsstrom eines Transformators (4), der einerseits mit einer Last oder einem Netz (6) und andererseits mit einem selbstgeführten Stromrichter (8) mit abschaltbarem Leistungshalbleiterschalter verknüpft ist. Erfindungsgemäß wird ein gemessener Wicklungsstrom ($i_R, i_S, i_T$) in Bereiche (A1,A3) mit nicht linearen Verzerrungen und in Bereiche (A2,A4) ohne Verzerrungen unterteilt und die zugehörigen Stromzeitflächen berechnet, aus denen dann eine Magnetisierungsunsymmetrie ($i_{R\mu=}, i_{S\mu=}, i_{T\mu=}$) ermittelt wird, aus der mittels eines Vergleiches mit einem Sollwert ($i^*_{\mu=}$) eine Kenngröße ($\Delta t_R$, $\Delta t_S$, $\Delta t_T$) bestimmt wird, mit deren Hilfe die Schaltzeitpunkte der Steuersignale ($S_v$) des Stromrichters (8) so lange zeitlich verschoben werden, bis der Istwert der Magnetisierungsunsymmetrie ($i_{R\mu=}$, $i_{S\mu=}$, $i_{T\mu=}$) gleich dem Sollwert ist. Somit kann man mit einem Strommeßwert ($i_R, i_S, i_T$) unabhängig von einem Offset-Fehler ($I_{OF}$) mittels einer errechneten Hauptfeldspannung ($u_{hR}$, $u_{hS}, u_{hT}$) nicht lineare Verzerrungen eines stromrichtergespeisten Transformators (4) einfach ausregeln.

FIG 1

**Beschreibung**

Die Erfindung bezieht sich auf ein Verfahren zur Ausregelung von Verzerrungen im Magnetisierungsstrom eines Transformators, der einerseits mit einer Last oder einem Netz und andererseits mit einem selbstgeführten Stromrichter mit abschaltbaren Leistungshalbleiterschaltern verknüpft ist und auf eine Vorrichtung zur Durchführung des Verfahrens (EP 0 634 833 A1).

Selbstgeführte Stromrichter mit abschaltbaren Leistungshalbleiterschaltern, insbesondere solche mit Spannungszwischenkreis, können als Wechselspannungsquelle auch zur Speisung von Transformatoren verwendet werden, die ausgangsseitig mit einer Last oder einem Netz verbunden sind. Bedingt durch unterschiedliche Speicherzeiten der Leistungshalbleiterschalter und Unexaktheiten in der Taktung sowie Ansteuerung können zusätzliche Gleichanteile in der Ausgangsspannung des Stromrichters entstehen. Diese Gleichanteile sind bei elektrischen Maschinen wegen des relativ großen Luftspalts unproblematisch. Bei einem stromrichtergespeisten Transformator üblicher Bauart wird der Transformator durch den Gleichanteil magnetisch unsymmetrisch belastet. Dies führt zu hohen einseitigen Magnetisierungsstromspitzen gerader Ordnung und Überströmen.

Eine im Betriebsfall auftretende Gleichstromkomponente verschiebt den magnetischen Arbeitspunkt des Transformators auf der Magnetisierungskennlinie des Transformatorkerns aus dem Nullpunkt. Daraus resultiert im Betrieb ein unsymmetrischer Stromverlauf, wobei die Unsymmetrie sehr stark von der Amplitude der Verschiebung abhängt. Wird ein Transformator bei Nennspannung betrieben, wird er im Normalfall magnetisch sehr hoch ausgenutzt, das heißt, der Magnetisierungsstrom weist bereits sichtbare, symmetrische Verzerrungen auf. Diese Verzerrungen sind symmetrisch und verursachen nur ungeradzahlige Oberschwingungen. Steht am Transformator eine Gleichstromkomponente an, dann können bereits sehr kleine Gleichstromamplituden zu sehr großen Verzerrungen im Magnetisierungsstrom führen. Die Grenzwerte für Gleichanteile dürfen bei modernen Transformatoren nur Promille des Nennwechselstromes erreichen. Diese Verzerrungen gehen dann nicht mehr im meist sehr viel größeren Primärstrom unter, sondern erzeugen sehr große Magnetisierungsstromspitzen, die sich dann auch im Primärstromverlauf sichtbar auswirken. Die Auswirkungen können anfangen bei Geräuschentwicklung aufgrund der elektromagnetischen Stromkräfte, bis hin zu Isolationsfehlern aufgrund der resultierenden hohen Spannungsspitzen an Widerständen bzw. Induktivitäten reichen. Diese unsymmetrischen Verzerrungen erzeugen nun aber auch geradzahlige Oberschwingungen. Wird der Transformator aus einem Halbleiterumrichter gespeist, insbesondere einem Pulsumrichter, so erreichen diese Stromspitzen sehr bald für die Leistungshalbleiterschalter die maximal erlaubten Stromwerte, was in Folge zur Abschaltung der Anlage bzw. zur Zerstörung der Leistungshalbleiter des Umrichters führen kann. Dabei ist es völlig nebensächlich, ob der Transformator sekundärseitig belastet ist oder nicht, da die Stromspitzen durch den Magnetisierungsstrom verursacht werden.

Damit diese Verzerrungen im Magnetisierungsstrom unproblematisch für den Transformator sind, bietet es sich wie bei der elektrischen Maschine an, den Transformator mit einem größeren (Ersatz-)Luftspalt auszugestalten. Dieser Luftspalt wird durch Blechschichtung erreicht. Auch erhält man eine magnetische Reserve, wenn die verlustmäßig zulässige magnetische Induktion nicht ausgenutzt wird. Nachteilig wirken sich durch diese Maßnahmen die hohen Eisenverluste, der höhere Magnetisierungsstrom, die große Bauleistung, ein höheres Gewicht und ein höherer Preis gegenüber einen Standardtransformator aus.

Aus der EP 0 580 192 B1 ist eine Antisättigungsschaltung für einen Transformator bekannt, der mit seiner Primärwicklung mit dem Ausgang eines Wechselrichters einer Schaltung zur Umwandlung einer DC-Spannung in eine sinusförmige AC-Spannung verbunden ist. Diese Umwandlungsschaltung umfaßt eine Steuersignal-Erzeugungseinrichtung, die mit dem Wechselrichter verbunden ist und Schaltsignale zum Steuern des Wechselrichters erzeugt, um nach Maßgabe einer vorbestimmten Schaltprozedur zu schalten, und eine Rückkopplungseinrichtung, die auf wenigstens eine Zustandsgröße der Schaltung reagiert, indem sie so auf die Steuersignale-Erzeugungseinrichtung einwirkt, daß die wenigstens eine Zustandsgröße modifiziert und ein vorbestimmtes stabiles Muster der sinusförmigen AC-Ausgangsspannung sichergestellt wird. Diese Antisättigungsschaltungseinrichtung umfaßt eine Korrektureinrichtung, die eine ein Ungleichgewicht in der von dem Wechselrichter ausgegebenen Spannung anzeigende Größe abtastet, die das Erscheinen einer DC-Spannungskomponente in der Primärwicklung des Transformators verursacht und ein Korrektursignal zum Modifizieren der Schaltsignale an die Steuersignal-Erzeugungseinrichtung so anlegt, daß die DC-Spannungskomponente aufgehoben wird. Die Korrektureinrichtung umfaßt eine Verarbeitungseinrichtung, die mit der Schaltersteuersignal-Erzeugungseinrichtung verbunden ist und auf die Schaltsignale anspricht, um die Funktion des Wechselrichters durch Berechnen einer der Ausgangsspannung des Wechselrichters entsprechenden Größe zu simulieren, einen Integrator zum Erzeugen einer mit der DC-Komponente der berechneten Größe korrelierenden Ausgangsgröße sowie eine Einrichtung zum Erlangen des Korrektursignals von der Ausgangsgröße des Integrators.

Aus der EP 0 634 833 A1 ist ein Regelungssystem für einen selbstgeführten Stromrichter mit abschaltbarem Leistungshalbleiterschalter und einem kapazitiven Speicher bekannt, wobei dieser selbstgeführte Stromrichter mittels eines Transformators an einem Netzknoten angeschlossen ist. Dieses Regelsystem umfaßt einen Spannungsregler, einen Gleichanteilsdetektor, einen Pulsweitenmodulator und eine Ansteuereinrichtung für die Leistungshalbleiterschalter des Pulswechselrichters. Der Spannungsregler ist einerseits mittels eines Meßgeräts mit dem Netzknoten und andererseits mit einem Sollwertgeber verbunden. Der Gleichanteilsdetektor ist eingangsseitig mit einem Subtrahierer verbunden, dessen Eingänge jeweils mittels eines Stromwandlers mit der Primär- und Sekundärseite des Transformators verbunden sind. Der Ausgang dieses Gleichanteilsdetektors ist mittels eines Addierers mit dem Ausgang des Spannungsreglers verknüpft, wobei der Ausgang des Addierers mit der Reihenschaltung des Pulsweitenmodulators und der Ansteuereinrichtung verbunden ist. Hat der Transformator ein Übersetzungsverhältnis von 1:n, so ist einem Stromwandler ein Multiplizierer mit der Zahl n nachgeschaltet. Bei einer Drehstromausführung ist als Transformator ein Stern-Dreieck-Transformator vorgesehen. Bei dieser Ausführungsform ist einem Stromwandler ein Stern-Dreieck-Wandler nachgeschaltet.

In den vorgenannten Fällen sind die Ansätze theoretisch richtig, aber praktisch in den meisten Fällen nicht zu realisieren. In den meisten praktischen Anwendungsfällen ist die Sekundärspannung des Transformators sehr hoch. In diesen Fällen würde man einen Hochspannungswandler von sehr großer Genauigkeit benötigen, um den Magnetisierungsstrom, der im Prozentbereich des Primärstromes liegt (bzw. auch Sekundärstromes) noch berechnen zu können. Berücksichtigt man Störungen und Meßfehler, so kommt man sehr bald zu dem Schluß, daß das Verfahren in diesen Fällen ungeeignet ist.

Bei einem weiteren Verfahren dieser EP 0 634 833 A1 wird für die Kenngrößenbildung der Maximalwert und der Minimalwert des berechneten Magnetisierungsstromverlaufes verwendet, um ein Maß für die unsymmetrische Verzerrung zu erhalten. Da der Zeitpunkt dieser Maxima- bzw. Minima im allgemeinen nicht genau bestimmbar ist, sind dieser Maximadetektor und dieser Minimumdetektor auf die Spannung am Netzknoten synchronisiert.

Der Erfindung liegt nun die Aufgabe zugrunde, ein Verfahren und eine Vorrichtung zur Ausregelung von Verzerrungen im Magnetisierungsstrom eines stromrichtergespeisten Transformators anzugeben, das gegenüber den bekannten Verfahren vereinfacht ist und eine größere Robustheit gegenüber Fehlern aufweist.

Diese Aufgabe wird erfindungsgemäß gelöst mit den Merkmalen des Anspruchs 1 bzw. 7.

Das erfindungsgemäße Verfahren basiert auf der Erkenntnis, daß eine Kenngrößenbildung theoretisch unabhängig von einer sekundären Belastung ist. Die nicht linearen Verzerrungen des Magnetisierungsstromverlaufs (Stromspitzen) liegen bei dessen Maximum. Die Phasenlage der unsymmetrischen Verzerrungen des Magnetisierungsstromes am Primärstrom hängen vom Lastwinkel ab. So addieren sich bei einer rein induktiven Belastung die Stromspitzen der Verzerrung zu den Scheitelwerten des Primärstromverlaufs. Ist die Last rein ohmsch, liegen die Verzerrungsspitzen beim Nulldurchgang des Primärstromes. Bei einer ohmschen Belastung kann die Verzerrung des Magnetisierungsstromes größer sein als bei einer induktiven Belastung, ohne daß die Maximalwerte für den Primärstrom des Pulsumrichters überschritten werden.

Mit dem erfindungsgemäßen Verfahren wird ein gemessener Wicklungsstromverlauf in Bereiche mit nicht linearen Verzerrungen und in Bereiche ohne Verzerrungen unterteilt. Damit der gemessene Wicklungsstromverlauf in vier Bereiche unterteilt werden kann, wird zunächst eine zum Magnetisierungsstrom proportionale Spannung, auch als Hauptfeldspannung bezeichnet, berechnet, wobei die Spannungsgleichung des Transformators verwendet wird. Diese Hauptfeldspannung wird dann mit der Vorgabe eines Teilintervalls (Abschnitt) in vier Teilintervalle unterteilt, wobei jeweils zwei Teilintervalle identisch sind. Gemäß der Erkenntnis bezüglich der Lage der Verzerrungen des Magnetisierungsstromverlaufs umfassen zwei Teilintervalle jeweils einen Nulldurchgang des Magnetisierungsstromverlaufs (Maximalwert der Hauptfeldspannung) und die beiden anderen Intervalle liegen beim Maximalwert (Nulldurchgang der Hauptfeldspannung).

Die Größe der Teilintervalle wird durch die Vorgabe eines Teilintervalls bestimmt, wobei die Größe des Teilintervalls vorgegeben wird, bei dem die Verzerrung im Magnetisierungsstromverlauf auftritt. Wie bereits erläutert, ist dies der Teilbereich beim Nulldurchgang der Hauptfeldspannung. Mit der Größe dieses Teilbereichs kann eine größere Robustheit gegenüber Fehlern bei der Nulldurchgangsbestimmung festgelegt werden. Eine bevorzugte Teilintervallsgröße ist dann gegeben, wenn die vier Teilintervalle gleich groß sind. Dadurch verringert sich der Rechenaufwand infolge der Symmetrie und ein optimales Verhältnis aus Robustheit und Kenngrößenamplitude wird erreicht.

Um eine Kenngröße ermitteln zu können, wird mittels eines gemessenen Wicklungsstromes und der Teilintervalle vier Stromzeitflächen berechnet, wobei die Summe der Stromzeitflächen der Teilintervalle um den Nulldurchgang der Hauptfeldspannung ein Maß für die Kenngröße darstellt. Dieses Summensignal, das im weiteren als Magnetisierungsunsymmetrie bezeichnet wird, wird mit einem Sollwert, der definitionsgemäß Null ist, verglichen. Die Regelgröße (Kenngröße) wird einem Steuersatz des selbstgeführten Stromrichters zugeführt, bis durch Verschiebung der Schaltzeitpunkte von Steuersignalen der Leistungshalbleiterschalter der Istwert der Magnetisierungsunsymmetrie gleich dem Sollwert ist.

Da die einzigen Meßwerte (Wicklungsströme) mittels Strommeßgliedern erfaßt werden, kann es aufgrund thermischer Effekte zu einer Gleichspannungsverschiebung des Meßwertes kommen. Diese Verschiebung kann die Größenordnung der geforderten Meßgenauigkeit erreichen. Mit Hilfe der beiden Teilbereiche, die um den Nulldurchgang des Magnetisierungsstromes (Maxima der Hauptfeldspannung) liegen, ist es nun aufgrund von Symmetrien möglich, diese Verschiebung, auch als Offset bezeichnet, herauszurechnen und die ermittelte Kenngröße damit zu korrigieren. Eine besonders einfache Rechnung erhält man, wenn die vier Teilintervalle gleich groß sind. In diesem Fall werden die Stromzeitflächen bei den Maxima der Hauptfeldspannung von der Summe der Stromzeitflächen um den Nulldurchgang der Hauptfeldspannung subtrahiert.

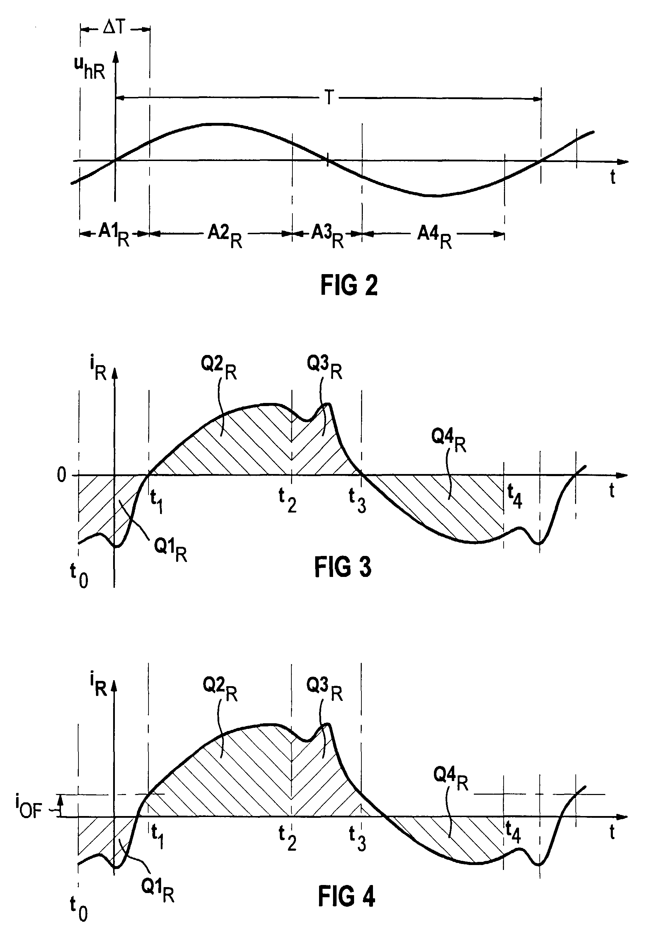

Sind die Wicklungen der Stromrichterseite voneinander strommäßig entkoppelt (Einphasensystem; Dreiphasensystem mit offenen Wicklungen oder in Dreieckschaltung), treten in einer Wicklung nur die in FIG 3 skizzierten Magnetisierungsstromspitzen dieser Phase auf. Bei strommäßiger Verkopplung der Wicklungen (z.B. Dreiphasensystem in Sternschaltung) werden von den Strommeßgliedern einer Phase auch die Magnetisierungsstromspitzen der benachbarten Phasen erfaßt. Diese Spitzen liegen zeitlich versetzt, so daß durch Reduzierung des Intervalls (vorzugsweise auf T/8) nur die magnetische Schieflage der betrachteten Phase erfaßt wird.

Eine bevorzugte Ausführungsform einer Vorrichtung zur Durchführung des erfindungsgemäßen Verfahrens zur Ausregelung von Verzerrungen im Magnetisierungsstrom eines stromrichtergespeisten Transformators ist ein Mikroprozessor.

Zur weiteren Erläuterung der Erfindung wird auf die Zeichnung Bezug genommen, in der eine Ausführungsform der Vorrichtung zur Durchführung des erfindungsgemäßen Verfahrens schematisch veranschaulicht ist.

Figur 1      zeigt ein Blockschaltbild einer Vorrichtung zur Durchführung des erfindungsgemäßen Verfahrens bei einem stromrichtergespeisten Transformator und in der

Figur 2      ist in einem Diagramm über der Zeit t eine Hauptfeldspannung $u_h$ dargestellt, wobei in den

Figuren 3 bis 6      jeweils in einem Diagramm über der Zeit t ein Verlauf eines gemessenen Wicklungsstromes für unterschiedliche Offset-Fehler und Magnetisierungsunsymmetrien veranschaulicht sind.

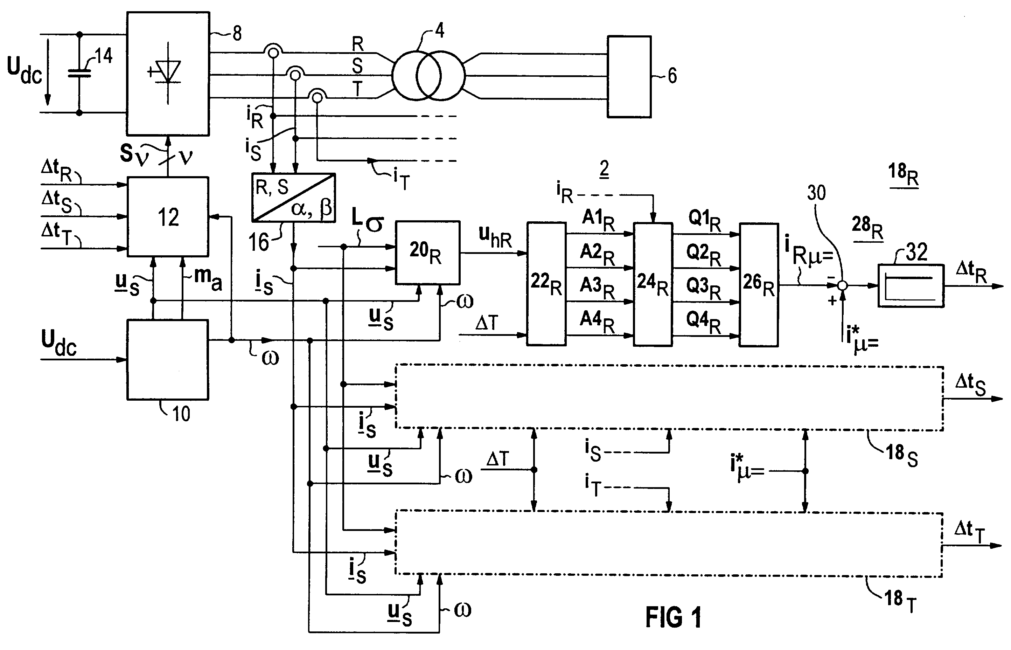

Die Figur 1 zeigt ein Blockschaltbild einer Vorrichtung 2 zur Durchführung des erfindungsgemäßen Verfahrens zur Ausregelung von Verzerrungen im Magnetisierungsstrom eines Transformators 4, der einerseits mit einer Last 6 und andererseits mit einem selbstgeführten Stromrichter 8 mit abschaltbarem Leistungshalbleiterschalter verknüpft ist. Der selbstgeführte Stromrichter 8 umfaßt neben dem Leistungsteil auch noch eine Regeleinrichtung 10 und einen Steuersatz 12. Die Regeleinrichtung 10 bildet in Abhängigkeit eines Sollwertes einen Stellspannungs-Raumzeiger $\underline{u}_s$ und eine zugehörige Kreisfrequenz $\omega$. In Abhängigkeit dieser Signale $\underline{u}_s$ und $\omega$ und einem Aussteuersignal $m_a$ generiert der Steuersatz 12 Steuersignale $S_v$ für die Leistungshalbleiterschalter des selbstgeführten Stromrichters 8. Der selbstgeführte Stromrichter 8 ist eingangsseitig mit einem kapazitiven Speicher 14 versehen, an dem die Gleichspannung $U_{dc}$ ansteht. Mittels dieser Gleichspannung $U_{dc}$ und dem Betrag des Stellspannungs-Raumzeigers $\underline{u}_s$ erhält man das Aussteuersignal $m_a$. Mittels des selbstgeführten Stromrichters 8 wird aus der eingangsseitigen Gleichspannung $U_{dc}$ ein dreiphasiges Spannungssystem erzeugt, das mittels des Transformators 4 auf das Spannungsniveau der Last transformiert wird. Der selbstgeführte Stromrichter 8 und der Transformator 4 können auch einphasig ausgeführt sein. Der selbstgeführte Stromrichter 8 wird in der Funktion eines Wechselrichters betrieben, so daß dieser auch als Pulswechselrichter bezeichnet wird.

Das Problem, daß bedingt durch unterschiedliche Speicherzeiten der Leistungshalbleiterschalter zusätzliche Gleichanteile in den Ausgangsspannungen des Stromrichters 8 entstehen können, ist unabhängig von der Anzahl der Phasen des Stromrichters 8, sondern ist nur von den verwendeten abschaltbaren Leistungshalbleitern abhängig.

Damit keine Gleichanteile in der Ausgangsspannung vorhanden sind, die Verzerrungen im Magnetisierungsstrom des Transformators 4 verursachen, wodurch die für die abschaltbaren Leistungshalbleiterschalter maximal erlaubten Stromwerte erreicht werden, was in Folge zur Abschaltung des Stromrichters 8 bzw. zur Zerstörung der abschaltbaren Leistungshalbleiterschalter führen kann, müssen die Steuersignale $S_v$ so generiert werden, daß die Gleichanteile ausgeregelt werden. Dazu ist die Vorrichtung 2 vorgesehen, an deren Ausgängen jeweils eine Kenngröße $\Delta t_R$, $\Delta t_S$ und $\Delta t_T$ für die Verzerrungen im Magnetisierungsstrom anstehen, die dem Steuersatz 12 zugeführt werden. In Abhängigkeit des Vorzeichens und der Amplitude einer jeden Kenngröße $\Delta t_R$, $\Delta t_S$ und $\Delta t_T$ werden die Schaltzeitpunkte der generierten Steuersignale $S_v$ derart zeitlich verschoben, daß die Verzerrungen im Magnetisierungsstrom ausgeregelt werden.

Die Vorrichtung 2 umfaßt einen Koordinatenwandler 16 und pro Phase R, S und T jeweils eine Einrichtung $18_R$, $18_S$ und $18_T$ zur Bestimmung einer Kenngröße $\Delta t_R$, $\Delta t_S$ und $\Delta t_T$. Die Einrichtungen $18_R$, $18_S$ und $18_T$ sind identisch aufgebaut, so daß aus Übersichtlichkeitsgründen nur die Einrichtung $18_R$ näher dargestellt ist. Anhand dieser näher dargestellten Einrichtung $18_R$ zur Bestimmung der Kenngröße $\Delta t_R$ wird im folgenden die Vorrichtung 2 erläutert.

Die Einrichtung $18_R$ zur Bestimmung der Kenngröße $\Delta t_R$ wird im folgenden anhand der Vorrichtung 2 erläutert.

Die Einrichtung $18_R$ zur Bestimmung der Kenngröße $\Delta t_R$ umfaßt eine Einrichtung $20_R$ zur Berechnung einer Hauptfeldspannung $u_{hR}$, eine Einrichtung $22_R$ zur Unterteilung der Hauptfeldspannung $u_{hR}$ in Abschnitte $A1_R$, $A2_R$, $A3_R$ und $A4_R$, eine Einrichtung $24_R$ zur Ermittlung von Stromzeitflächen $Q1_R$, $Q2_R$, $Q3_R$ und $Q4_R$, eine Einrichtung $26_R$ zur Bestimmung eines Wertes einer Magnetisierungunsymmetrie $i_{R\mu=}$ und eine Regeleinrichtung $28_R$. Die Einrichtung

$20_R$ zur Berechnung der Hauptfeldspannung $u_{hR}$ wird eingangsseitig und die Regeleinrichtung $28_R$ ist ausgangsseitig in der Einrichtung $18_R$ zur Bestimmung der Kenngröße $\Delta t_R$ angeordnet. Der Einrichtung $20_R$ sind ein berechneter Strom-Raumzeiger $\underline{i}_s$, ein bereitgestellter Stellspannungs-Raumzeiger $\underline{u}_s$, eine bereitgestellte Kreisfrequenz $\omega$ und ein Parameter "Streuinduktivität $L_\sigma$" des Transformators 4 zugeführt. Die Kreisfrequenz $\omega$ und der Stellspannungs-Raumzeiger $\underline{u}_s$ werden von der Regeleinrichtung 10 ermittelt. Der Strom-Raumzeiger $\underline{i}_s$ wird mittels des Koordinatenwandlers 16 aus den gemessenen Wicklungsströmen $i_R, i_S$ und $i_T$ bestimmt. Der gemessene Wicklungsstrom $i_R$ bzw. $i_S$ bzw. $i_T$ wird der Einrichtung $24_R$ bzw. $24_S$ bzw. $24_T$ zur Ermittlung von Stromzeitflächen $Q1_R$, $Q2_R$, $Q3_R$ und $Q4_R$ bzw. $Q1_S$, $Q2_S$, $Q3_S$ und $Q4_S$ bzw. $Q1_T$, $Q2_T$, $Q3_T$ und $Q4_T$ zugeführt. Als Einrichtung $20_R$ zur Berechnung der Hauptfeldspannung $u_{hR}$ ist beispielsweise eine Recheneinheit vorgesehen, mit deren Hilfe und mittels der folgenden Gleichung:

$$u_h = \underline{u}_s + j\omega L_\sigma \cdot \frac{1}{2} \cdot \underline{i}_s \qquad\qquad (1)$$

die Hauptfeldspannung $u_{hR}$ berechnet wird. Der Verlauf dieser Hauptfeldspannung $u_{hR}$ ist in einem Diagramm über der Zeit t in der Figur 2 näher dargestellt. Als Einrichtung $20_R$ kann auch ein Teilprogramm eines Mikroprozessors vorgesehen sein, der beispielsweise für die Einrichtung $18_R$ zur Bestimmung der Kenngröße $\Delta t_R$ vorgesehen ist. Der Mikroprozessor kann vorzugsweise für die Vorrichtung 2 vorgesehen sein, wobei jedes Bauteil der Vorrichtung 2 mittels eines Software-Programms realisiert wird.

Zur Vereinfachung können in Gleichung (1) anstelle der genannten Istwerte auch die Sollwerte $\underline{u}_s^*$ und/oder $\underline{i}_s^*$, abgeleitet aus der Regelung bzw. dem Steuersatz, verwendet werden. Eine besonders exakte Berechnung der Hauptfeldspannung $u_h$ zur Vorgabe der Intervall-Lage ist aufgrund der Strombewertung in einem Intervall nicht erforderlich.

Die Hauptfeldspannung $u_h$ ist proportional zum Spannungsabfall an der Hauptinduktivität des Transformators 4, der vom Magnetisierungsstrom verursacht wird. Somit eilt der Magnetisierungsstrom um 90° el. der Hauptfeldspannung $u_h$ nach. Wie bereits eingangs erläutert, liegen die nicht linearen Verzerrungen des Magnetisierungsstromes, verursacht durch die Gleichstromanteile in den Wicklungsströmen, bei dessen Maximum. Das heißt, die Bereiche A1 und A3 der berechneten Hauptfeldspannung $u_{hR}$, die um den Nulldurchgang angeordnet sind, betreffen die Bereiche, in denen die unsymmetrischen Verzerrungen im Magnetisierungsstrom auftreten. Die Bereiche A2 und A4 sind dann Bereiche des Magnetisierungsstromes, in denen keine unsymmetrischen Verzerrungen auftreten.

Mittels der Einrichtung $22_R$ wird die berechnete Hauptfeldspannung $u_{hR}$ mit Hilfe eines vorbestimmten Zeitbereichs $\Delta T$ in Abschnitte $A1_R$, $A2_R$, $A3_R$ und $A4_R$ unterteilt. Dazu müssen zunächst die Nulldurchgänge der zugeführten Hauptfeldspannung $u_{hR}$ ermittelt werden. Der vorbestimmte Zeitbereich $\Delta T$ gibt den Zeitbereich um den Nulldurchgang der Hauptfeldspannung $u_{hR}$ an, d.h., der vorbestimmte Zeitbereich $\Delta T$ ist gleich dem Zeitbereich der Abschnitte $A1_R$ und $A3_R$. Um die Teilintervalle festzulegen, wird der vorbestimmte Zeitbereich $\Delta T$ symmetrisch um den Nulldurchgang der Hauptfeldspannung $u_{hR}$ angeordnet. Dadurch sind ebenfalls die Abschnitte A2 und A4 bestimmt, die jeweils zwischen den Abschnitten A1 und A3 bzw. A3 und A1 angeordnet sind. Jeder Abschnitt $A1_R,...,A4_R$ ist nun durch seine Teiluntervall-Grenzen festgelegt. Die Breite des vorbestimmten Teilbereichs $\Delta T$ beträgt beispielsweise T/8 bis T/4, vorzugsweise T/4, wobei T die Periodendauer der Grundschwingung der Hauptfeldspannung $u_h$ ist. Bei einem Teilbereich $\Delta T = T/4$ sind die Abschnitte $A1_R$ bis $A4_R$ gleich, so daß die Abschnitte A1 und A3 symmetrisch um den Nulldurchgang und die Abschnitte A2 und A4 symmetrisch um die Grundschwingungs-Maxima angeordnet sind. Durch diesen Wert des vorbestimmten Zeitbereichs $\Delta T$ verringert sich der Rechenaufwand und die Vorrichtung 2 weist ein optimales Verhältnis aus Robustheit gegenüber Fehlern bei der Nulldurchgangsbestimmung und einer Kenngrößenamplitude auf.

Der Einrichtung $24_R$ zur Ermittlung von Stromzeitflächen $Q1_R$, ...,$Q4_R$ des gemessenen Wicklungsstromes $i_R$ werden diese ermittelten Abschnitte $A1_R,...,$ $A4_R$ mit den jeweiligen Teilintervall-Grenzen und der gemessene Wicklungsstrom $i_R$ zugeführt. Die Einrichtung $24_R$ kann beispielsweise aus vier Integratoren bestehen, denen die Teilintervallgrenzen als Integrationsgrenzen zugeordnet werden. In den Figuren 3 bis 6 sind die Stromzeitflächen $Q1_R$ und $Q3_R$ und $Q2_R$ und $Q4_R$ jeweils durch eine Schraffur markiert.

Aus diesen ermittelten Stromzeitflächen $Q1_R,...,Q4_R$ des gemessenen Wicklungsstromes $i_R$ wird mit Hilfe der Einrichtung $26_R$ ein Wert einer Magnetisierungsunsymmetrie $i_{R\mu=}$ ermittelt. Dazu ist in dieser Einrichtung $26_R$ folgende Gleichung:

$$i_{\mu=} = (Q1 + Q3) \cdot (T-2\Delta T) - 2\Delta T (Q2 + Q4) \qquad (2)$$

hinterlegt. Wenn der vorbestimmte Zeitbereich $\Delta T = T/4$ ist, so vereinfacht sich diese Gleichung zur folgenden Gleichung:

$$i_{\mu=} = Q1 + Q3 - Q2 - Q4 . \qquad (3)$$

Am Ausgang dieser Einrichtung $26_R$ steht dann der Wert der Magnetisierungsunsymmetrie $i_{R\mu=}$ an.

Diese Magnetisierungsunsymmetrie $i_{R\mu=}$ wird der Regeleinrichtung $28_R$ zugeführt, die einen Vergleicher 30 und vorzugsweise einen P-Regler 32 aufweist. Der berechnete Wert der Magnetisierungsunsymmetrie $i_{R\mu=}$ ist mit dem invertierenden Eingang des Vergleichers 30 verbunden, wobei am nichtinvertierenden Eingang ein Sollwert ansteht, der definitionsgemäß Null ist.

Ist der Istwert der Magnetisierungsunsymmetrie ungleich dem Sollwert, so erzeugt der P-Regler 32 eine Kenngröße $\Delta t_R$, die dem Steuersatz 12 des selbstgeführten Stromrichters 8 zugeführt wird. Dadurch werden die Schaltzeitpunkte der Steuersignale $S_1$ und $S_2$ der abschaltbaren Leistungshalbleiterschalter der Phase R in Abhängigkeit des Vorzeichens und der Amplitude der Kenngröße $\Delta t_R$ verschoben, wodurch der Istwert der Magnetisierungsunsymmetrie $i_{R\mu=}$ gleich dem Sollwert wird.

Die Figuren 3 bis 6 zeigen mehrere Fallbeispiele. In der Darstellung gemäß Figur 3 ist der Offset-Fehler $I_{OF}$ gleich Null und die Summe der Stromzeitflächen $Q1_R$ und $Q3_R$ gleich Null. Daraus folgt, daß die Kenngröße $\Delta t_R = 0$ ist und die Steuersignale $S_1$ und $S_2$ für die abschaltbaren Leistungshalbleiterschalter der Phase R des Stromrichters 8 nicht verschoben werden müssen.

Der Figur 4 ist zu entnehmen, daß ein positiver Offset-Fehler $I_{OF}$ vorliegt, da die Summe der Stromzeitflächen $Q2_R$ und $Q4_R$ größer Null ist. Werden die ermittelten Stromzeitflächen $Q1_R$ bis $Q4_R$ in die Gleichung (2) eingesetzt, so erhält man für die Magnetisierungsunsymmetrie $i_{R\mu=}$ einen Wert gleich Null. Das heißt, gegenüber der Darstellung der Figur 3 ist nur ein Offset-Fehler $I_{OF}$ hinzugekommen.

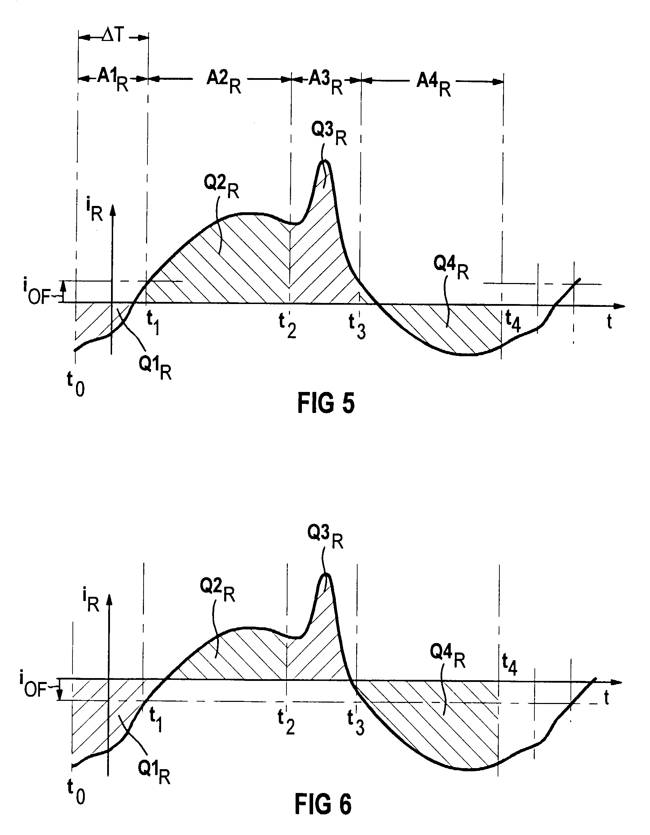

In der Figur 5 ist der Stromverlauf des gemessenen Wicklungsstromes $i_R$ über der Zeit t dargestellt und die Stromzeitflächen $Q1_R$ bis $Q4_R$ schraffiert. Aus dieser Darstellung ist zu erkennen, daß ein positiver Offset-Fehler $I_{OF}$ vorhanden ist und daß der Wert der Magnetisierungsunsymmetrie $i_{R\mu=}$ größer Null ist. Wendet man die bevorzugte Gleichung (3) für die Bestimmung der Magnetisierungsunsymmetrie $i_{R\mu=}$ an, so erhält man einen positiven Wert.

Der Figur 6 ist zu entnehmen, daß ein negativer Offset-Fehler $I_{OF}$ vorliegt. Werden in diesem Fall nun die Stromzeitflächen $Q1_R$ und $Q3_R$ addiert, so erhält man einen Wert gleich Null. Daraus könnte man schließen, daß der Wert der Magnetisierungsunsymmetrie $i_{R\mu=}$ gleich Null ist. Dies ist jedoch nicht richtig, da der Offset-Fehler $I_{OF}$ und die Magnetisierungsunsymmetrie $i_{R\mu=}$ einander entgegengesetzt sind. Wird die Gleichung (2) bzw. (3) angewendet, so erhält man einen Wert, der kleiner Null ist.

Mittels des erfindungsgemäßen Verfahrens kann man mittels einer Meßgröße unabhängig von einem Offset-Fehler $I_{OF}$ den Wert einer Magnetisierungsunsymmetrie in den Phasen R, S und T des Transformators 4 ermitteln und mittels des Steuersatzes 12 ausregeln, wobei der Rechenaufwand durch Symmetrien nicht sehr groß ist und trotzdem ein optimales Verhältnis aus Robustheit und Kenngrößenamplitude erreicht wird.

**Patentansprüche**

1. Verfahren zur Ausregelung von Verzerrungen im Magnetisierungsstrom eines Transformators (4), der einerseits mit einer Last (6) oder einem Netz und andererseits mit einem selbstgeführten Stromrichter (8) mit abschaltbaren Leistungshalbleiterschaltern verknüpft ist, mit folgenden Verfahrensschritten:

   a) Ermittlung eines Strom-Raumzeigers ($\underline{i}_S$) aus gemessenen stromrichterseitigen Wicklungsströmen ($i_R, i_S, i_T$) des Transformators (4),

   b) Berechnung einer Hauptfeldspannung ($u_{hR}, u_{hS}, u_{hT}$) jeweils einer Phase (R,S,T) des Transformators (4) in Abhängigkeit des ermittelten Strom-Raumzeigers ($\underline{i}_s$), eines bereitgestellten Stellspannungs-Raumzeigers ($\underline{u}_s$) und einer Kreisfrequenz ($\omega$) des selbstgeführten Stromrichters (8), sowie eines Parameters ($L_\sigma$) des Transformators (4),

c) Ermittlung eines Wertes der Magnetisierungsunsymmetrie ($i_{R\mu=}$, $i_{S\mu=}$, $i_{T\mu=}$) jeweils einer Phase (R,S,T) in Abhängigkeit der berechneten Hauptfeldspannung ($u_{hR}$,$u_{hS}$,$u_{hT}$), von Augenblickswerten eines gemessenen Wicklungsstromes ($i_R$, $i_S$,$i_T$) und eines vorbestimmten Zeitbereichs ($\Delta T$) und

d) Ermittlung einer Kenngröße ($\Delta t_R$, $\Delta t_S$, $\Delta t_T$) mittels eines Vergleiches des Wertes der ermittelten Magnetisierungsunsymmetrie ($i_{R\mu=}$, $i_{S\mu=}$, $i_{T\mu=}$) und eines Sollwertes einer Magnetisierungsunsymmetrie ($i^*_{\mu=}$), die einem Steuersatz (12) des selbstgeführten Stromrichters (8) zugeführt wird, damit die Schaltzeitpunkte der abschaltbaren Leistungshalbleiterschalter derart verschoben werden, daß jede Kenngröße ($\Delta t_R$, $\Delta t_S$, $\Delta t_T$) zu Null wird.

2. Verfahren nach Anspruch 1, wobei die Hauptfeldspannung ($u_{hR}$,$u_{hS}$,$u_{hT}$) mittels folgender Gleichung:

$$u_h = \underline{u}_s + j\omega L_\sigma \cdot \frac{1}{2} \cdot \underline{i}_s$$

berechnet wird, die dann entsprechend dem Phasenwinkel des Wicklungsstromes ($i_R$,$i_S$,$i_T$) phasenverschoben wird.

3. Verfahren nach Anspruch 1, wobei jede Hauptfeldspannung ($u_{hR}$,$u_{hS}$,$u_{hT}$) mittels des vorbestimmten Zeitbereichs ($\Delta t$) derart in vier Abschnitte ($A1_R$, ..., $A4_R$; $A1_S$, ..., $A4_S$; $A1_T$, ..., $A4_T$) unterteilt wird, daß Nulldurchgänge und Maxima einer jeden Hauptfeldspannung ($u_{hR}$, $u_{hS}$,$u_{hT}$) innerhalb eines Abschnitts ($A1_R$, ..., $A4_R$; $A1_S$, ..., $A4_S$; $A1_T$, ..., $A4_T$) angeordnet sind, wobei die Abschnitte ($A1_R$, $A3_R$; $A1_S$, $A3_S$; $A1_T$, $A3_T$) der Nulldurchgänge gleich dem vorbestimmten Zeitbereich ($\Delta T$) sind.

4. Verfahren nach Anspruch 1 und 3, wobei für jeden Abschnitt ($A1_R$,...,$A4_R$; $A1_S$,...,$A4_S$; $A1_T$,...,$A4_T$) eines gemessenen Wicklungsstromes ($i_R$,$i_S$,$i_T$) eine Stromzeitfläche ($Q1_R$,..., $Q4_R$; $Q1_S$,...,$Q4_S$; $Q1_T$,...,$Q4_T$) berechnet wird.

5. Verfahren nach Anspruch 1 und 4, wobei der Wert der Magnetisierungsunsymmetrie ($i_{R\mu=}$, $i_{S\mu=}$, $i_{T\mu=}$) in Abhängigkeit der ermittelten Stromzeitflächen ($Q1_R$,$Q3_R$;$Q1_S$,$Q3_S$;$Q1_T$,$Q3_T$) anhand der folgenden Gleichung:

$$i_{\mu=} = Q1 + Q3$$

berechnet wird.

6. Verfahren nach Anspruch 1 und 4, wobei der Wert der Magnetisierungsunsymmetrie ($i_{R\mu=}$, $i_{S\mu=}$, $i_{T\mu=}$) in Abhängigkeit der ermittelten Stromzeitflächen ($Q1_R$,...,$Q4_R$; $Q1_S$,...,$Q4_S$; $Q1_T$, ...,$Q4_T$) anhand der folgenden Gleichung:

$$i_{\mu=} = (Q1 + Q3) \cdot (T-2\Delta T) - 2\Delta T (Q2 + Q4)$$

mit T = Periodendauer der Grundschwingung einer Hauptfeldspannung
berechnet wird.

7. Vorrichtung (2) zur Durchführung des Verfahrens zur Ausregelung von Verzerrung im Magnetisierungsstrom eines Transformators (4) nach Anspruch 1, der einerseits mit einer Last (6) und andererseits mit einem eine Regeleinrichtung (10) und einen Steuersatz (12) aufweisenden selbstgeführten Stromrichter (8) mit abschaltbaren Leistungshalbleiterschaltern verknüpft ist, wobei

- diese Vorrichtung (2) einen Koordinatenwandler (16) und pro Phase (R,S,T) eine Einrichtung (18$_R$, 18$_S$, 18$_T$) zur Bestimmung einer Kenngröße ($\Delta t_R$, $\Delta t_S$, $\Delta t_T$) aufweist, wobei
- die Einrichtungen (18$_R$, 18$_S$, 18$_T$) jeweils eingangsseitig mit einem Ausgang des Koordinatenwandlers (16) und mit einem Stellgrößen- und einem Frequenzausgang der Regeleinrichtung (10) des selbstgeführten Stromrichters (8) und jeweils ausgangsseitig mit einem Eingang des Steuersatzes (12) des selbstgeführten Stromrichters (8) verknüpft sind, und wobei
- jeder Einrichtung (18$_R$,18$_S$,18$_T$) ein gemessener Wicklungsstrom ($i_R$,$i_S$,$i_T$), ein Wert eines vorbestimmten Zeitbereichs ($\Delta T$), ein Parameter ($L_\sigma$) und ein Sollwert einer Magnetisierungsunsymmetrie ($i_{\mu=}^*$) zugeführt sind.

8. Vorrichtung nach Anspruch 7, wobei die Einrichtung (18$_R$, 18$_S$,18$_T$) zur Bestimmung einer Kenngröße ($\Delta t_R$, $\Delta t_S$, $\Delta t_T$) eine Einrichtung (20$_R$,20$_S$,20$_T$) zur Berechnung einer Hauptfeldspannung ($u_{hR}$,$u_{hS}$,$u_{hT}$), eine Einrichtung (22$_R$, 22$_S$, 22$_T$) zur Unterteilung der Hauptfeldspannung ($u_{nR}$, $u_{nS}$, $u_{nT}$) in Abschnitte (A1$_R$, ..., A4$_R$; A1$_S$, ..., A4$_S$; A1$_T$, ..., A4$_T$), eine Einrichtung (24$_R$,24$_S$,24$_T$) zur Ermittlung von Stromzeitflächen (Q1,...,Q4), eine Einrichtung (26$_R$, 26$_S$,26$_T$) zur Bestimmung eines Wertes einer Magnetisierungsunsymmetrie ($i_{R\mu=}$, $i_{S\mu=}$, $i_{T\mu=}$) und eine Regeleinrichtung (28$_R$,28$_S$, 28$_T$), die einen Vergleicher (30) und einen Regler (32) enthält, aufweist, wobei diese Bauteile elektrisch in Reihe geschaltet sind und die Einrichtung (20$_R$,20$_S$,20$_T$) zur Berechnung einer Hauptfeldspannung ($u_{hR}$,$u_{hS}$,$u_{hT}$) eingangsseitig und die Regeleinrichtung (28$_R$,28$_S$,28$_T$) ausgangsseitig angeordnet sind.

9. Vorrichtung nach Anspruch 8, wobei als Einrichtung (18$_R$, 18$_S$,18$_T$) zur Berechnung einer Kenngröße ($\Delta t_R$, $\Delta t_S$, $\Delta t_T$) ein Mikroprozessor vorgesehen ist.

FIG 1

**FIG 2**

**FIG 3**

**FIG 4**

**FIG 5**

**FIG 6**